(19) Europäisches Patentamt
European Patent Office
Office européen des brevets

(11) **EP 4 418 166 A1**

(12) **EUROPEAN PATENT APPLICATION**

(43) Date of publication:
**21.08.2024   Bulletin 2024/34**

(21) Application number: **23275024.0**

(22) Date of filing: **17.02.2023**

(51) International Patent Classification (IPC):
**G06N 3/0495** (2023.01)    **G06N 20/00** (2019.01)
**G06N 3/08** (2023.01)       **G06F 9/50** (2006.01)
**G06N 3/063** (2023.01)      **G06N 3/082** (2023.01)
**G06F 11/30** (2006.01)      **G06F 1/3228** (2019.01)

(52) Cooperative Patent Classification (CPC):
**G06N 3/082; G06F 1/3228; G06F 9/5094;**
**G06N 3/0495; G06N 3/063; G06N 3/096;**
G06F 11/3062

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **BAE SYSTEMS plc**
**London SW1Y 5AD (GB)**

(72) Inventor: **The designation of the inventor has not yet been filed**

(74) Representative: **BAE SYSTEMS plc**
**Group IP Department**
**Warwick House**
**P.O. Box 87**
**Farnborough Aerospace Centre**
**Farnborough Hampshire GU14 6YU (GB)**

(54) **ENERGY EFFICIENT MACHINE LEARNING MODELS**

(57)     The present invention relates to energy efficient machine learning (ML) models, in particular to energy efficient ML model generation for energy efficient inferencing. According to an aspect of the invention, there is provided a computer implemented method of operating an ML training system for training a ML model. The method comprising: receiving an energy consumption (EC) target threshold for training; training an ML model based on a training dataset for an Epoch; estimating an EC of the ML training system whilst training said ML model over said Epoch; determining whether an accumulated EC estimate is below the EC target threshold; in response to determining the accumulated EC estimate is less than the EC target threshold, updating the training dataset for a new Epoch and repeating the training, estimating, and generating steps using the updated training dataset with said new Epoch until the ML model is validly trained; terminating training of the ML model in response to determining the accumulated EC meets or exceeds said EC target threshold; outputting said validly trained ML model and associated EC metrics. Further aspects of the invention includes a computer-implemented method of operating a ML training/inference system for performing EC benchmarking of the trained ML model for inferencing and a ML training and inferencing system for implementing said methods.

Figure 1a

EP 4 418 166 A1

## Description

FIELD

The present invention relates to energy efficient machine learning (ML) models, in particular to energy efficient ML model generation for energy efficient inferencing.

BACKGROUND

Current state of the art deep learning methods requires an increasingly large amount of training data and lengthy training cycles for developing ever more complex AI or ML models for inference. In 2018 worldwide emissions from all human sources was equivalent to 51.8 billion tonnes of carbon dioxide ($CO_2$). $CO_2$ is the main greenhouse gas heating the planet, responsible for 75% of global warming. As AI or ML models become ever more complex, they are also becoming increasingly energy intensive to train and use for inference.

Net zero can be defined as achieving a state in which activities result in no net impact on the climate from greenhouse gas emissions. This presents a conundrum in terms of how complex AI/ML solutions can be delivered whilst allowing countries and/or organisations to meet their 'net zero' commitments. This challenge is exacerbated as the size of state-of-the-art AI/ML models increase, which in turn drives the energy demands of these models to also increase exponentially. At the same time end-users or customers are demanding increasingly complex solutions against a backdrop of countries, companies and organisations striving to meet 'net zero' targets. There is a desire for developing sustainable AI/ML frameworks/methods that can assist in achieving 'Net Zero' commitments.

SUMMARY

According to a first aspect of the present invention, there is provided a computer implemented method of operating an ML training system for training a machine learning (ML) model, the method comprising: receiving an energy consumption (EC) target threshold for training; training an ML model based on a training dataset for an Epoch; estimating an EC of the ML training system whilst training said ML model over said Epoch; determining whether an accumulated EC estimate is below the EC target threshold; in response to determining the accumulated EC estimate is less than the EC target threshold, updating the training dataset for a new Epoch and repeating the training, estimating, and generating steps using the updated training dataset with said new Epoch until the ML model is validly trained; terminating training of the ML model in response to determining the accumulated EC meets or exceeds said EC target threshold; outputting said validly trained ML model and associated EC metrics.

The method of the first aspect may further comprise, wherein estimating said EC of said ML training system further comprising: receiving real-time sensor and performance data from the hardware of said ML training system during training said ML model over said Epoch; estimating the EC of the ML training system based on the received real-time sensor and performance data over the Epoch.

The hardware of the ML training system may comprise one or more from the group of: one or more central processing units (CPUs); one or more graphical processing units (GPUs); one or more tensor processing units (TPUs); one or more memory or storage units; one or more communications or network resources; and/or any other hardware of the ML training system associated with training said ML model and affecting the EC of the ML training system.

The real-time sensor and performance data may comprise one or more of: electricity usage of the hardware of the ML training system during training of the ML model; temperature sensor data associated with the hardware used during training of the ML model; clock cycles associated with one or more CPUs, GPUs and/or TPUs of said ML training system; power usage data associated with one or more CPUs, GPUs and/or TPUs and/or memory units of said ML training system; and a number of floating point operations (FLOPS) performed by one or more CPUs, GPUs and/or TPUs and/or memory units associated with the ML training system when training said ML model.

The method of the first aspect may further comprise, wherein estimating the EC of the ML training system further comprising calling an EC routine configured to monitor the EC performance of the corresponding portions of hardware ML training system.

The method of the first aspect may further comprise generating the accumulated EC estimate based on the estimated EC for the current Epoch and any previous Epochs.

The EC estimate may be measured in terms of carbon or $CO_2$ emissions.

The EC estimate may be an EC estimate per training sample.

The method of the first aspect may further comprise: determining whether the ML model is validly trained based on whether the average accuracy / loss of the ML model output achieves a required accuracy / loss threshold; and terminating training of the ML model in response to determining the ML model is validly trained.

The method of the first aspect may further comprise, wherein terminating training of the ML model in response to determining the accumulated EC meets or exceeds said EC target threshold further comprising determining whether the ML model is considered validly trained based on whether the average accuracy / loss of the ML model (108a) output achieves a required accuracy / loss threshold.

The method of the first aspect may further comprise terminating training of the ML model in response to determining that the accuracy / loss of the ML model is diverging away from the required accuracy / loss threshold over multiple consecutive Epochs.

The method of the first aspect may further comprise terminating training of the ML model in response to determining that the convergence rate of the accuracy / loss for the ML model towards the required accuracy / loss for the current Epoch is below a convergence rate threshold for multiple consecutive Epochs.

The method of the first aspect may further comprise, for each of the trained ML models that are validly trained, performing EC benchmarking of each of the validly trained ML models for inferencing based on, for each validly trained ML model (108a), the following steps of: receiving an EC target threshold for inferencing with said each trained ML model; receiving a batch of input data for input to said each trained ML model for inferencing; performing ML model inferencing using the trained ML model on the batch of input data; estimating an EC per inference for the trained ML model when performing ML model inferencing on the batch of input data; determining whether the EC estimate per inference is greater than the EC target threshold for inferencing; in response to determining the EC estimate per inference is less than or equal to the EC target threshold, outputting an EC ML model including data representative of the trained ML model and the EC estimate per inference; in response to determining the EC estimate per inference is greater than the EC target threshold for inferencing, performing ML model optimisation on the trained ML model for reducing the EC estimate per inference and repeating EC benchmarking of the resulting optimised ML model.

The method of the first aspect may further comprise, wherein estimating an EC per inference comprising: estimating a total EC for processing the batch of input data; and estimating an average EC per inference based on dividing the total EC with the number of input data samples in the batch of input samples.

The method of the first aspect may further comprise, wherein performing optimisation of the trained ML model further comprising: modifying the trained ML model based on at least one of quantisation techniques and weight pruning techniques to form an optimised ML model; and retraining the optimised ML model to meet an EC target threshold for training or when the optimised ML model is validly trained.

According to a second aspect of the present invention, there is provided a computer-implemented method of operating a ML training/inference system for performing EC benchmarking of a trained ML model for inferencing, the method comprising: receiving an EC target threshold for inferencing with said each trained ML model; receiving a batch of input data for input to said each trained ML model for inferencing; performing ML model inferencing using the trained ML model on the batch of input data; estimating an EC per inference for the trained ML model when performing ML model inferencing on the batch of input data; determining whether the EC estimate per inference is greater than the EC target threshold for inferencing; in response to determining the EC estimate per inference is less than or equal to the EC target threshold, outputting an EC ML model including data representative of the trained ML model and the EC estimate per inference; in response to determining the EC estimate per inference is greater than the EC target threshold for inferencing, performing ML model optimisation on the trained ML model for reducing the EC estimate per inference and repeating EC benchmarking of the resulting optimised ML model.

The method of the second aspect may further comprise, wherein estimating an EC per inference comprising: estimating a total EC for processing the batch of input data; and estimating an average EC per inference based on dividing the total EC with the number of input data samples in the batch of input samples.

The method of the second aspect may further comprise, wherein performing optimisation of the trained ML model further comprising: modifying the trained ML model based on at least one of quantisation techniques and weight pruning techniques to form an optimised ML model; and retraining the optimised ML model to meet an EC target threshold for training or when the optimised ML model is validly trained.

The method of the second aspect may further comprise: wherein the trained ML model is trained or retrained based on: receiving an EC target threshold for training; training the ML model based on a training dataset for an Epoch; estimating an EC of the ML training system whilst training said ML model over said Epoch; determining whether an accumulated EC estimate is below the EC target threshold; in response to determining the accumulated EC estimate is less than the EC target threshold, updating the training dataset for a new Epoch and repeating the training, estimating, and generating steps using the updated training dataset with said new Epoch until the ML model is validly trained; terminating training of the ML model in response to determining the accumulated EC meets or exceeds said EC target threshold; outputting said validly trained ML model and associated EC metrics.

According to a third aspect of the present invention, there is provided a computer program product comprising computer readable instructions that, when executed by a computer, cause the computer to perform the method according to the computer-implemented methods of the first and/or second aspects and/or any one or more of the methods as described herein.

According to a fourth aspect of the present invention, there is provided an apparatus comprising one or more processors and a memory, the memory storing computer readable instructions that, when executed by the one or more processors, cause the apparatus to perform the method according to the computer-implemented methods of the first and/or second aspects and/or any one or more of the methods as described herein.

According to a fifth aspect of the present invention, there is provided a system comprising: one or more processors; and a memory, the memory storing computer readable instructions that, when executed by the one or more processors, cause the apparatus to perform the method according to the computer-implemented methods of the first and/or second aspects and/or any one or more of the methods as described herein.

According to a sixth aspect of the invention, there is provided a machine learning training and inferencing system comprising: an ML training unit configured for implementing the computer-implemented method according to the first aspect for training one or more ML models; an ML inferencing and optimisation unit configured for implementing the computer implemented method according to the second aspect for benchmarking one or more validly trained ML models; an energy consumption training and optimisation control unit configured for: estimating EC of the ML training unit training each ML model of the one or more ML models; estimating EC of ML inferencing and optimisation unit when benchmarking each validly trained ML model; and controlling the ML training unit in training the ML model or ML inferencing and optimisation unit when performing ML model inferencing based on the estimated ECs.

The machine learning training and inferencing system, wherein: the energy consumption training and optimisation control unit may be configured for: selecting those validly trained and/or optimised ML models that meet the corresponding EC target thresholds for training and EC target thresholds for inferencing; storing the selected validly trained and/or optimised ML models along with their corresponding EC target thresholds for training and EC target thresholds for inferencing for use by one or more users for inferencing in an energy efficient manner, wherein each of the one or more users may perform carbon offsetting based on the corresponding EC target thresholds for training and EC target thresholds for inferencing of the validly trained or optimised ML model used by each of the one or more users.

BRIEF DESCRIPTION OF THE FIGURES

Embodiments of the invention will now be described by way of example only with reference to the figures, in which:

Figure 1a shows a schematic overview of a training/inference system for generating energy efficient ML models that meet a required energy consumption (EC) target threshold;
Figure 1b shows a schematic overview of a training/inference framework for the training/inference system of figure 1a;
Figure 1c shows a schematic overview of various example hardware components used by the training/inference system of figure 1a;
Figure 2a shows an example method of training an ML model to meet an EC target threshold;
Figure 2b shows an example method for benchmarking a trained ML model for inferencing and/or optimisation of the trained ML model;
Figure 3 shows another example method and training/inferencing framework for training an ML model and/or benchmarking the trained ML model to meet an EC target threshold;
Figure 4 shows a schematic diagram of a table of test results for training an active learning baseline ML model using the methods/frameworks of Figures 1a to 3;
Figure 5 shows a schematic diagram showing test results for training a transfer learning model using the methods/frameworks of Figures 1a to 3;
Figure 6 shows a schematic overview of a computing system;
Figure 7 shows a schematic overview of a computer-readable medium;

DETAILED DESCRIPTION

This specification describes systems, apparatus, methods for quantitatively measuring energy efficiency (or energy consumption) as a metric of ML model performance for use in a training/inferencing framework over the ML model lifecycle and for optimising, in an energy efficient manner, the training and deployment of complex ML models. The training/inferencing framework may be used to develop an energy efficient standard from which to benchmark and/or assess the various ML algorithms/techniques for developing and training ML models based on the energy consumption of the hardware used to implement the training and/or inferencing of said ML models. The systems, apparatus and methods described herein may be used and applied in the pursuit of sustainable AI/ML training/inferencing systems.

The framework may use an arrangement of one or more ML model Application Programming Interfaces (APIs) for measuring energy consumption of the hardware (e.g., central processing units (CPUs), graphical processing units (GPUs), tensor processing units (TPUs), and/or memory units and the like) used during training/inference of one or more ML models. The energy consumption may be based on a number of quantitative energy efficiency metrics (e.g., Carbon Cost, FLOPS, Model Size, time, power etc.). Energy consumption may be measured and/or calculated in real-time from sensors and/or performance parameters associated with the hardware during runtime training/inferencing of the ML models. This may be further used for assessing the measured energy consumption and output of one or more ML models during both training and inference processes. Energy consumption efficiency metrics are captured at key points during the training and/or inferencing (e.g., per batch/ per Epoch / per K-fold) and may be used to determine whether to continue training, whether to optimize the resulting ML models, and/or whether to the ML model for inferencing in an energy efficient manner.

Machine learning (ML) algorithms are computational methods that can be used to devise complex ML models that lend themselves to recognizing patterns, classifying data and/or solving complex problems from an input training dataset and, once trained, can be used to reason over input data that it hasn't seen before for inferencing, prediction and analysis of the patterns/classifications/complex process etc. The ML models may learn from historical relationships and trends in the associated input training dataset and are configured for modelling one or more aspects or portions of the complex process and/or patterns in the input training data. ML algorithm(s) may comprise or represent one or more or a combination of computational methods that can be used to generate analytical ML models that lend themselves to, without limitation, solving complex problems and/or recognizing desired patterns within training datasets such as, by way of example only but is not limited to, prediction and analysis of complex processes and/or recognizing various patterns when provided with new input data the ML model has not seen before. ML algorithm(s) may iteratively perform training of an ML model based on processing the training samples of the training dataset. Multiple passes of the entire training dataset may be performed, in which each pass of the training dataset is called an Epoch. An Epoch is when all the training data samples of an input training dataset is processed and is defined as the total number of iterations of all the training data in one cycle for training the ML model.

Examples of ML algorithm(s) that may be used herein may include or be based on, by way of example only but is not limited to, any ML algorithm that can be trained on a labelled and/or unlabelled training datasets to generate an ML model associated with the labelled and/or unlabelled training dataset, one or more supervised ML algorithms, semi-supervised ML algorithms, unsupervised ML algorithms, linear and/or non-linear ML algorithms, ML algorithms associated with classification, ML algorithms associated with regression and the like and/or combinations thereof. Some examples of ML algorithms may include or be based on, by way of example only but is not limited to, one or more of active learning, multitask learning, transfer learning, neural message parsing, one-shot learning, dimensionality reduction, decision tree learning, association rule learning, similarity learning, data mining algorithms/methods, artificial neural networks (NNs), deep NNs, deep learning, deep learning ANNs, inductive logic programming, support vector machines (SVMs), sparse dictionary learning, clustering, Bayesian networks, reinforcement learning, representation learning, similarity and metric learning, sparse dictionary learning, genetic algorithms, rule-based machine learning, learning classifier systems, and/or one or more combinations thereof and the like.

ML model performance may be assessed based on loss, accuracy, confusion matrix, precision and recall, but energy efficiency is not typically associated with the performance characteristic of an ML model. Various methods for measuring the energy efficiency (i.e. energy consumption (EC)) of an ML model may include one or more of: the amount of electricity consumed training or executing an ML model for inference; carbon emissions, such as amount of $CO_2$ emitted during training or executing an ML model for inference; Floating Point Operations (FLOPS) providing an estimate to the amount of work performed by a computational process such as training or executing an ML model for inference; cost of fetching data from memory during training or executing an ML model for inference; the number of ML parameters and/or hyperparameters used by the ML model, which may be correlated to the amount of work; elapsed real time total running time for training or executing an ML model. The methods/frameworks, apparatus and systems as described herein provide an energy efficient methodology/framework for EC ML model training and inferencing that may be applied to develop sustainable AI/ML models for achieving 'Net Zero' commitments of users, companies, countries and the like.

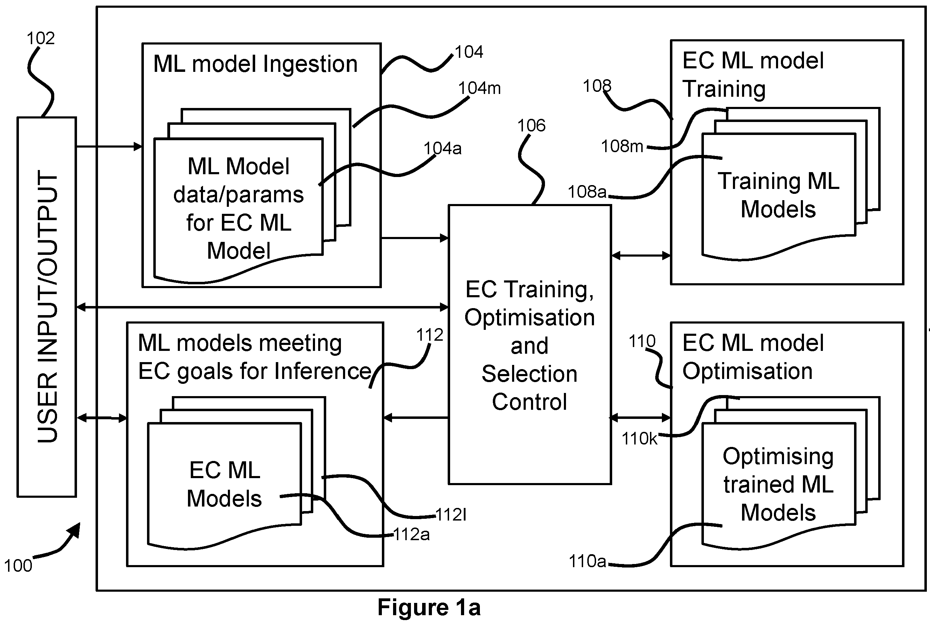

Figure 1a shows a schematic overview of a training/inference system 100 for training and optimising ML models for inference in an energy efficient manner. The training/inference system 100 may be based on the training/inference framework for use in developing sustainable ML models. The training/inference system 100 includes a user interface 102, an ML model ingestion unit 104, an EC training, optimisation and selection controller (TOSC) 106, an EC ML model training unit 108, an EC ML model optimisation unit 110, and an ML model output store and/or unit 112. The ML model ingestion unit 104, EC ML model training unit 108, EC ML model optimisation unit 110 and ML model output unit 112 are connected via the EC TOSC unit 106.

The model ingestion unit 104 receives from one or more users via the user interface 102 ML model data 104a-104m including the necessary ML model information required for EC ML model training unit 108 to train, using an ML model algorithm, one or more ML models 108a-108m. The ML model information may include, by way of example only but not limited to, computer implemented instructions for generating an ML model, ML model hyperparameters, the type of ML model algorithm/structure, ML training datasets for use in training the ML model, and/or other ML model parameters and the like. Each of the ML model data 104a-104m may further include an EC target threshold, which may be set by the user to indicate the maximum EC that may be used by the training/inference system 100 for training an ML model based on the ML model data, this EC target threshold may also be used by the training/inference system 100 for optimisation or ML model inferencing in relation to the resulting trained ML model. The ML model data 104a may further include further accuracy/loss goals to indicate when the corresponding trained ML model 108a has been validly trained, the accuracy/loss goals may include data representative of an output error loss/loss or accuracy threshold that the ML model 108a output should achieve during training.

Alternatively or additionally, the ML model data may further include data representative of an EC training target threshold (or EC target threshold for training) and an EC optimisation/inferencing target threshold (or EC target threshold for inferencing), which are used by the EC TOSC unit 106 for controlling: a) training, via the EC ML model training unit 108, an ML model 108a based on the ML model data 104a; and b) optimising/inferencing, via the EC ML model optimisation/inferencing unit 110, the trained ML model 108a resulting in an optimised trained ML model 110a; respectively. The EC target threshold for training may be different or the same as the EC target threshold for inferencing. Should the training of the ML model 108a and the optimising/inferencing of the trained ML model 110a meet the EC target threshold (or the corresponding EC training target threshold and EC optimisation/inferencing target threshold), then the ML model 110a may be selected for output to the ML model output unit 112 for storage and/or output to the corresponding user and the like. Multiple ML EC models 112a-112l may be stored by ML model output unit 112 for use in inferencing in an energy efficient manner, where users are guaranteed the resulting EC ML model meets a given EC target threshold when inferencing and also met a given EC target threshold during training. Thus, users may select a suitable EC ML model from the stored EC ML models 112a-112l based on the EC training target threshold and/or EC optimisation/inferencing target threshold that meets the user's requirements and/or promotes sustainable AI. As well, users may then be able to offset their EC of the ML model using one or more carbon offset programmes and the like, thus meeting "net zero" carbon emissions in relation to said selected EC ML model 112a being used for inferencing.

In this example, the EC TOSC unit 106 may receive each of the ML model data 104a-104m from each user, and is configured to control the training and/or optimisation/inferencing of the corresponding ML models 108a-108m that results. For each ML model data 104a received, the EC TOSC unit 106 is configured to monitor the EC of the hardware used by the training/inference system 100 during training of the corresponding ML model 108a. The hardware used by the training/inference system 100 may include one or more CPUs, one or more GPUs, one or more TPUs and/or memory units from which EC may be measured and/or calculated based on real-time sensor data and/or real-time hardware parameters/data associated with the CPU(s), GPU(s), TPU(s), and/or memory or storage units (e.g., volatile or non-volatile memory) and/or communication resources used during training/inference (e.g., energy consumption associated with data transferred over a network and the like). The EC TOSC unit 106 may use the measured or calculated EC corresponding to training the ML model 104a to control the training of the ML model 104a. For example, the EC TOSC unit 106 may estimate EC for training the ML model 104 over an Epoch of the training dataset, and then compare the accumulated EC used so far for training the ML model 104 with the corresponding EC target threshold for that ML model 108a (or EC training target threshold). From the comparison, the EC TOSC unit determines whether to continue training the ML model 108a or whether to exit training and/or stop and provides the corresponding instructions to the EC ML model training unit 108.

For example, the EC TOSC 106 may determine, based on the accumulated EC of an ML model 108a after each Epoch during training, whether to continue training the ML model 108a and/or determine whether the ML model 108a is validly trained (e.g., achieves a minimum error loss or meets an accuracy target). If the accumulated EC is sufficiently below an EC target threshold (e.g., a maximum EC a user has specified for training the ML model 108a), then the EC TOSC unit 106 may allow further training of the ML model 108a over another Epoch of the training dataset to proceed. Otherwise, the EC TOSC unit 106 may instruct the EC ML model training unit 108 to terminate training of the ML model 108a. On terminating training of the ML model 108a, the EC TOSC may also request the EC ML model training unit 108 to check whether the ML model 108a has been validly trained. An ML model 108a may have been validly trained when the output error loss/loss or accuracy of the ML model 108a output has achieved a certain accuracy/loss goal. The accuracy/loss goal may be set by the user as part of the ML model data 104a provided by the user, or it may be based on a default accuracy/loss goal. In response to the ML model 108a achieving the certain accuracy/loss goal, the EC TOSC unit 106 may reporting the various efficiency metrics such as the accumulated EC, EC per training item, to the user via the user interface 102.

Although a validly trained ML model 108a may be output from the EC ML model training unit 108, this does not necessarily mean that the trained ML model 108a meets an EC target threshold for inferencing or an EC per inference target. With this in mind, the EC TOSC unit 106 is further configured to benchmark and/or assess whether the trained ML model 108a meets an EC target threshold when inferencing, or meets an EC inferencing target threshold when inferencing. The EC TOSC unit 106 passes the trained ML model 108a (which meets the EC target threshold or EC training target threshold set by the user) to the EC ML model optimisation / inferencing unit 110. The EC ML model optimisation / inferencing unit 110 is configured to determine whether a trained ML model 108a meets an EC target threshold or an EC target threshold per inference. This may be performed using an input dataset that may include, without limitation, for example a plurality of training data samples from the training data set or a plurality of training data samples from a withheld portion of the training dataset used for training the trained ML model 108a. Alternatively or additionally, the input dataset for input to the trained ML model 108a may include real-world input data samples from which the trained ML model 108a may perform inferencing on. In order to determine an EC per inference for the trained ML model 108a, a batch of input data samples may be formed for input to the trained ML model 108a. The EC ML model optimisation / inferencing unit 110 is configured to use the trained ML model 108a for processing the batch of input data samples.

During the inferencing benchmarking for the ML model 108a, the EC TOSC unit 106 is configured to monitor the EC of the hardware used by the training/inference system 100 during inferencing of the ML model 108a. As discussed, the hardware used by the training/inference system 100 may include one or more CPUs, one or more GPUs, one or more TPUs, memory units and/or communications resources from which the EC TOSC unit 106 may query and receive real-time sensor data and/or real-time hardware parameters/data associated with the CPU(s), GPU(s), TPU(s), memory/data storage units, and/or communications resources for measuring and/or calculating an estimated EC while the ML model 108a is performing inferencing on the batch of input data samples. The EC TOSC unit 106 may use the measured or calculated EC corresponding to inferencing the ML model 108a to determine an EC per inference estimate for the ML model 108a. For example, the EC TOSC unit 106 may estimate an EC for inferencing the ML model 108a over the batch of input data samples. The EC may then be divided by the number of input data sample the batch to determine the EC per inference estimate for the ML model 108a. This EC per inference estimate may be performed over multiple batches of input data samples for determining an average EC per inference estimate for the ML model 108a.

Should the EC per inference estimate meet the EC inferencing target threshold or an EC per inferencing target threshold, then the ML model 108a is considered for output to the EC ML model output unit 112. However, the EC ML model optimisation / inferencing unit 110 may be configured to further optimise the trained ML model 108a to reduce the EC per inference using various optimisation methods such as, without limitation, quantisation and/or weight pruning and the like, which may require retraining the modified ML model 108 to form an optimised ML model 110a. This additional optimisation processing may also be controlled by the EC TOSC unit 106 until an EC optimisation target threshold is reached and/or when no further optimisation is possible, whilst the optimised EC ML model 110a still meets the accuracy / loss goals set by the user, or within a certain error threshold thereof. Once optimised and an EC per inference estimate for the optimised ML model 110a has been determined, the optimised ML model 110a along with the efficiency metrics including, but not limited to, the EC per inference estimate, EC for training said ML model 108a, EC for optimising said ML model 110a, may be sent to the EC ML output unit 112 for storing the optimised ML model 110a and efficiency metrics as an EC ML model 112a.

As previously discussed, multiple ML EC models 112a-112l may be stored by ML model output unit 112 for use in inferencing in an energy efficient manner, where users are guaranteed from the efficiency metrics associated with each EC ML model 112a that the resulting EC ML model 112a meets a given EC target threshold or EC per inference target when inferencing and also met a given EC target threshold during training and/or EC optimisation target threshold during optimisation/inferencing. Thus, users may select a suitable EC ML model 112a from the stored EC ML models 112a-112l based on the efficiency metrics of the EC ML model 112a including EC training target threshold and/or EC optimisation/inferencing target threshold. If these metrics meets the user's requirements, then the user may select the EC ML model 112a knowing the EC that the EC ML model 112a meets, and so may offset their EC for using the selected EC ML model 112a using one or more carbon offset programmes and the like, thus assisting a user in meeting "net zero" carbon emissions in relation to said selected EC ML model 112a being used for inferencing. The training/inferencing system 100 may be used to assist the development and/or promotion of sustainable AI.

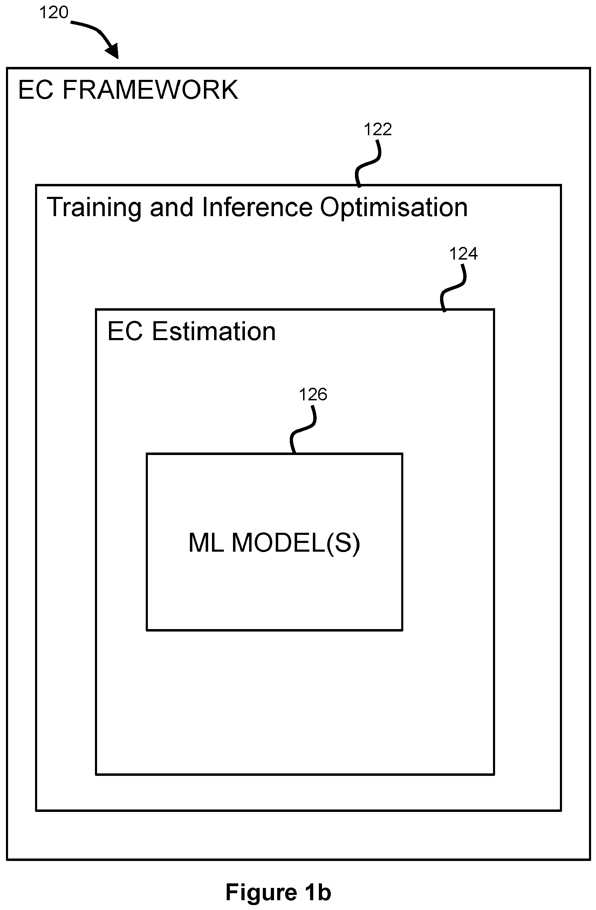

Figure 1b shows a schematic overview of an EC training/inferencing framework 120 that may be used by the training/inferencing system 100 in controlling training, optimising and/or inferencing of ML models in an energy efficient manner. The EC training/inferencing framework 120 includes a training and inference/optimisation level framework 122 that may define how to configure training and/or inferencing of the ML model, an EC estimation framework 124 that may define the key points for receiving sensor data and estimating EC in relation to training and/or inferencing, and an ML model framework for defining the ML model for training. The EC training/inferencing framework 120 may include customisable training parameters for controlling training / inferencing of the ML model, output efficiency metrics such as, without limitation, for example EC estimates that may be measured from sensor data and/or hardware parameters of the training/inferencing system 100 to assess the energy efficiency of the resulting trained ML model and/or ML model for inferencing regardless of whether it is validly trained or not, and also termination/exit criteria for ending training of the ML model early based on EC target thresholds for training and/or EC target thresholds for inferencing and the like. The EC estimate for a corresponding ML model can be converted into a carbon cost, or estimate of $CO_2$ based on analysing the energy mix used by the training/inferencing system 100 for training the corresponding ML model and/or performing inferencing using the corresponding ML model and the like. For example, the training / inference system 100 may use the computational resources of a datacentre / or cloud-based platform, where the energy mix includes the electricity mix associated with electricity provided to the datacentre / cloud-based platform when the training/inferencing system 100 uses the computational resources to process the corresponding ML model during training and/or inferencing. From the amount of the electricity of the energy mix used by the training system 100 and the EC estimate for the corresponding ML model, a carbon cost or amount of $CO_2$ may be estimated for the corresponding ML model during training and/or inferencing.

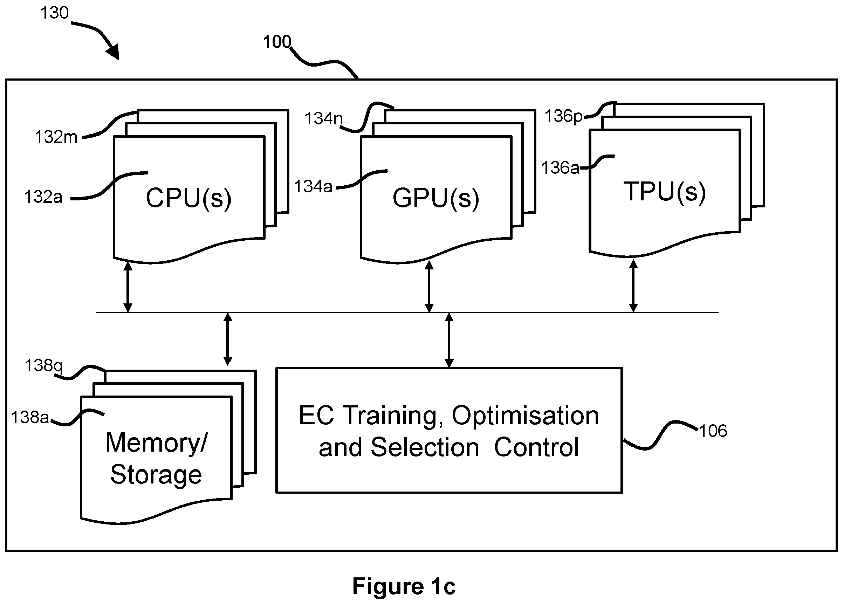

Figure 1c shows a schematic overview of the hardware 130 underlying the training/inference system 100. In this example, the EC TOSC unit 106 is connected to at least one or more of the following hardware components including, without limitation, for example one or more processors 132a-132m (e.g., CPUs), one or more graphical processing units 134a-134n (GPUs), one or more tensor processing units 136a-136p (TPUs), and one or more memory / storage units 138a-138q. Each of these types of hardware, i.e., CPU 132a, GPU 134a, TPU 136a and/or memory / storage unit 138a may be used to measure and/or estimate the EC for training an ML model and/or the EC for performing trained ML model inferencing. The EC TOSC unit 106 may receive real-time sensor data readings and/or parameters associated with EC of each of at least one of the CPUs 132a-132m, GPUs 134a-134n, TPUs 136a-136p and/or memory/storage units 138a-138q whilst these hardware components are training the ML model and/or performing ML model inferencing based on a trained ML model.

Various methods for measuring the EC of an ML model may include one or more of: the amount of electricity consumed by the CPUs 132a-132m, GPUs 134a-134n, TPUs 136a-136p and/or memory/storage units 138a-138q during training or execution of an ML model for inference; carbon emissions, such as amount of $CO_2$ emitted during training or executing an ML model for inference; Floating Point Operations (FLOPS) performed by the CPUs 132a-132m, GPUs 134a-134n, TPUs 136a-136p and/or memory/storage units 138a-138q providing an estimate to the amount of work performed by the computational process of training or executing an ML model for inference; cost of fetching data from memory/storage units 138a-138q during training or executing an ML model for inference; the number of ML parameters and/or hyperparameters used by the ML model, which may be correlated to the amount of work; elapsed real time total running time for training or executing an ML model.

For example, the EC TOSC unit 106 may receive from one or more CPUs 132a-132m an corresponding CPU power (Watts) over a period of time the CPU performed training and/or inferencing, and which may be used to calculate energy used per CPU (e.g., in terms of kWh) when performing training and/or inferencing. The EC TOSC unit 106 may receive from one or more GPUs 134a-134n an corresponding GPU power (Watts) over a period of time the GPU performed training and/or inferencing, and which may be used to calculate energy used per GPU (e.g., in terms of kWh) when performing training and/or inferencing. The EC TOSC unit 106 may also receive from one or more TPUs 136a-136p a corresponding TPU power (Watts) over a period of time the TPU performed training and/or inferencing, and which may be used to calculate energy used per TPU (e.g., in terms of kWh) when performing training and/or inferencing. The EC TOSC unit 106 may also receive from one or more memory / storage units 138a-138q a corresponding memory / storage power (Watts) over a period of time the memory / storage unit was used/accessed during performance of training and/or inferencing, and which may be used to calculate energy used per memory storage unit when performing training and/or inferencing. The EC TOSC 106 may calculate an EC estimate when performing training and/or inferencing based on the summation of the corresponding energy per CPU, energy per GPU, energy per TPU, energy per memory storage unit and the like. The EC estimate may also be converted into a carbon cost (e.g., $CO_2$ kg/ kWh), or estimate of $CO_2$ based on analysing the electricity mix associated with providing electricity to the training/inferencing system 100. Although the EC estimation may be based on CPU, GPU, TPU and/or memory / storage power during a period of time, this is by way of example only, and it is to be appreciated by the skilled person that may other types of parameters, sensor readings, and the like may be used to calculate EC estimate during ML model training and/or inferencing.

For example, the energy mix of the electricity provided used by the computational resources of the training and inferencing system 100 may be analysed to determine an energy mix carbon cost (EMCC) measured in kg of $CO_2$ per kilo watt hour (kg $CO_2$/ kWh). The EMCC may be calculated is based on a combination of the percentage of electricity generated per each energy source of a number of energy sources (*NES>0*) and a corresponding carbon metric determined for each energy source depending on the type of each energy source. The types of energy sources used to generate electricity may include one or more from the group of: coal, petroleum, natural gas, geothermal, hydroelectricity, nuclear, solar, wind, tidal, heat pump, and/or any other type of energy source used to generate electricity by an electricity provider. The carbon metric (CM) for each energy source may be based on an estimate of the amount of carbon dioxide ($CO_2$) in kilograms emitted by said each ES per kWh. As an example, EMCC may be calculated based on:

$$EMCC = \sum_{k=1}^{NES}(PES_k)(CM_k)$$

where NES > 0 is the number of energy sources used to generate electricity in the energy mix, $PES_k$ represents the percentage of electricity generated by the k-th energy source in the energy mix and $CM_k$ is the carbon metric determined for the k-th energy source with units $CO_2$ kg / kWh.

The EC estimate for training / inferencing an ML model may be calculated based on measuring or estimating the power consumption (e.g., Watts or Joules/second) of the computational resources (e.g. CPU, GPU, TPU, memory, communication resources, etc.) used by the training / inference system 100 over the period of time taken (e.g., in terms of hours) during training / inferencing of the ML model. The EC estimate may be generated in terms of kWhs. The EC estimate may be converted into a carbon cost or amount of $CO_2$ based on the energy mix by multiplying EC estimate with the EMCC of the electricity mix used by the computational resources of the training / inference system 100. For example, the EC estimate for training / inferencing an ML model may be based on:

$$EC = \left( \sum_{j=1}^{NC} TCP_j \right) TTh$$

, where $NC$ is the number of components of the computational and/or communication resources used for training / inferencing an ML model, $TCP_k$ is the total component power consumed for the $j$-th component over a time period $TTh$ used for training or inferencing of the ML model, where $TTh$ is measured in hours. The components of the computational resources used by the training / inferencing system 100 may include: one or more CPUs, one or more GPUs, one or more TPUs, one or more memory units, memory or data storage units, communications and/or network resources, and/or one or more power supplies, and/or one or more other components of the computational / communication resources that may be able to be measured as consuming energy and the like. The EC estimate may be calculated as a carbon cost based on multiplying EC with EMCC.

Although the EC estimate may be based on a function of energy mix and estimated EC per component / communication resource and/or converted into a carbon cost based on multiplying EC with EMCC, this is for simplicity and by way of example only and the invention is not so limited, it is to be appreciated by the skilled person that the estimated EC of training/inferencing for each ML model may further include various modifications to the above functions and/or combinations of thereof, such as further factors, parameters and/or components that may more accurately model the estimation of EC of training/inferencing an ML model such as, without limitation, for example emissions factors based on regional hourly, daily, monthly, and/or yearly averages or further granularity as required; emissions data for servers, mobile devices, and/or laptops that may perform training / inferencing using the ML models; converting or scaling the EC consumption for inferencing to different types of target devices that will operate said ML model (e.g., different server technologies, mobile devices, computing devices, and/or laptops, and the like); taking into account the envisaged scaling usage of the ML model such as the number of target devices or functional units and the like; and/or any other combination of factors, parameters, and emissions for use in estimating an EC for training and/or inferencing each ML model; including combinations thereof; including modifications thereto; as herein described; and/or as the application demands.

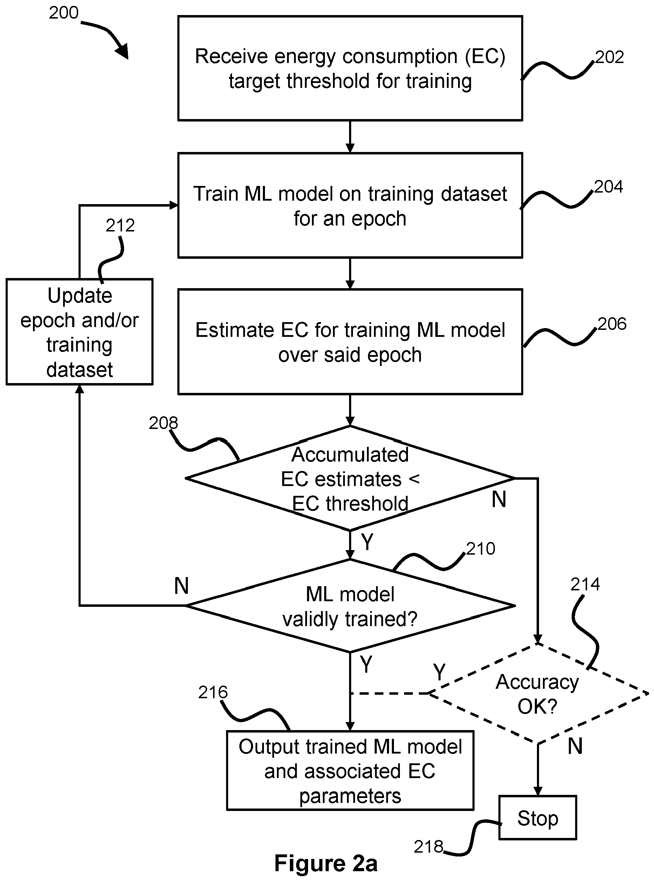

Figure 2a shows a schematic overview of a method 200 for training ML models in an energy efficient manner. The method may be performed by training and inferencing system 100 using the EC TOCS unit 106 and EC ML model training unit 108 of figure 1a and/or one or more computers operating in one or more locations. The method 200 may include the following steps of:

In step 202, receiving an EC target threshold for training an ML model.

In step 204, training the ML model on a training dataset for an Epoch.

In step 206, estimating EC for training the ML model over the Epoch. For example, this may include receiving real-time sensor and performance data from the hardware of the ML training system used during training of the ML model over the Epoch. The real-time sensor and performance data may include, without limitation, for example one or more of: temperature sensor data; clock cycles associated with one or more CPUs, GPUs and/or TPUs of said ML training system; a number of FLOPS performed by one or more CPUs, GPUs, TPUs associated with the ML training system training said ML model. Calculating an estimated EC based on the received real-time sensor data and/or performance data for training the ML model over the Epoch.

In step 208, determining whether accumulated EC estimates over the Epoch, and/or previous Epochs, is less than the EC target threshold for training the ML model. This may include generating an accumulated energy consumption estimate based on the estimated energy consumption. If the accumulated EC estimates over the Epoch is less than the EC target threshold (e.g., 'Y'), then proceeding to step 210, otherwise (e.g., 'N') proceeding to step 214.

In step 210, determining whether the ML model is validly trained. The ML model may be validly trained if it is determined whether the average accuracy / loss of the output of the ML model when compared with the training samples is above an accuracy / loss threshold or achieves an accuracy / loss goal. If the ML model is determined to be validly trained (e.g., 'Y'), then proceeding to step 216, otherwise (e.g., 'N') proceeding to step 212.

In step 212, updating the Epoch number and/or training dataset for the next Epoch, and proceed to perform step 204 using the updated Epoch number and/or updated training dataset for training the ML model.

In step 214, determining whether the ML model is validly trained by checking whether the average accuracy / loss of the output of the ML model when compared with the training samples is above an accuracy / loss threshold or achieves an accuracy / loss goal. If the accuracy / loss of the output over the ML model meets the required performance criteria for the ML model being validly trained (e.g., 'Y'), then proceeding to step 216, otherwise (e.g., 'N'), proceeding to step 218.

In step 216, outputting the trained ML model and associated efficiency metrics including EC parameters such as, without limitation, for example accumulated EC, EC per training sample, and/or any other efficiency and/or EC metrics/parameters and the like.

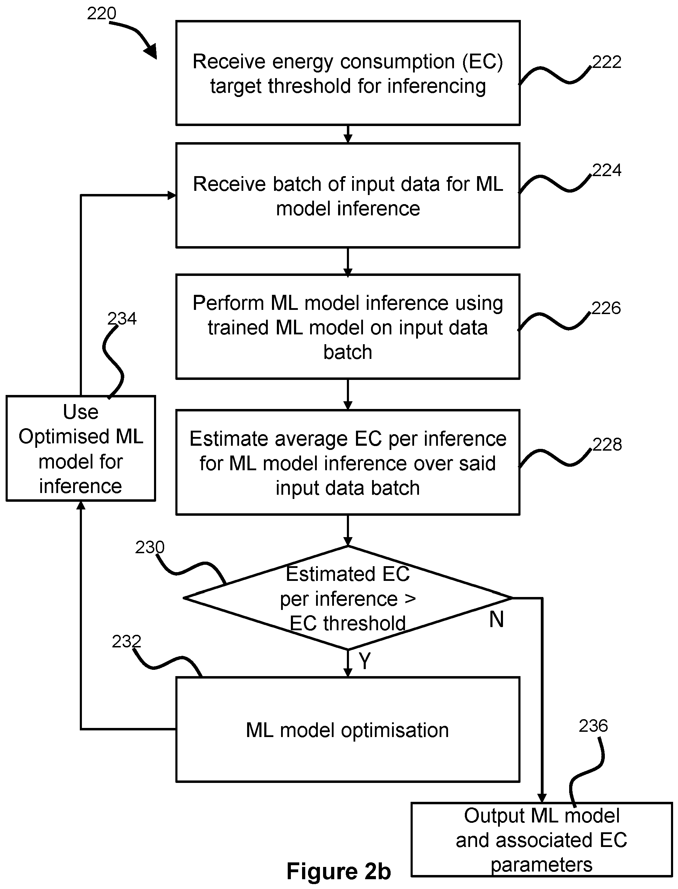

Figure 2b shows a schematic overview of a method 220 for benchmarking ML model inferencing and/or optimisation in an energy efficient manner. The method may be performed by training and inferencing system 100 using the EC TOCS unit 106 and EC ML model optimisation and inferencing unit 110 of figure 1a and/or one or more computers operating in one or more locations. The method 220 may include the following steps of:

In step 222, receiving an EC target threshold for inferencing with an ML model.

In step 224, receiving a batch of input data for ML model inference.

In step 226, performing ML model inference using trained ML model on the batch of input data;

In step 228, estimating EC for ML model inference using the trained ML model with said batch of input data. The average EC per inference may be estimated from the EC estimate per batch by dividing the EC estimate per batch by the number of input data samples in a batch. The average EC per inference over all batches of input data may be accumulated and averaged to determine an average EC per inference. For example, estimating the EC for ML model inferencing may include receiving real-time sensor and performance data from the hardware performing or executing the trained ML model performing inferencing over the batch of input data. The real-time sensor and performance data may include, without limitation, for example one or more of: temperature sensor data; clock cycles associated with one or more CPUs, GPUs and/or TPUs of said ML training system; a number of FLOPS performed by one or more CPUs, GPUs, TPUs associated with the ML training system performing inferencing using said ML model. Calculating an estimated EC may be performed based on the received real-time sensor data and/or performance data during inferencing with the trained ML model.

In step 230, determining whether the EC estimate per inference is greater than the EC target threshold for inferencing with the trained ML model. If the EC estimate per inference greater than the EC target threshold for inferencing (e.g., 'Y'), then proceeding to step 232, otherwise (e.g., 'N') proceeding to step 236.

In step 232, performing ML model optimisation on the trained ML model. For example, this may include modifying the trained ML model using, by way of example only and without limitation, quantisation techniques and/or weight pruning techniques or any other suitable optimisation technique for reducing the EC of the trained ML model during inferencing. The modified ML model may be retrained using method 200 of figure 2a using EC target threshold for training and for achieving the accuracy / loss goals associated with the trained ML model and the like. Once retrained, the modified trained ML model forms an optimised ML model.

In step 234, passing the optimised ML model to step 224, where the optimised ML model may be used in place of the trained ML model for inferencing, and the method 220 proceeds to step 224 for performing ML model inference using the optimised ML model. As an option, an optimisation loop counter may be used to keep track of the number of attempts on optimising the trained ML model, and when the optimisation loop counter reaches a maximum optimisation count threshold, then the method 220 is terminated as any further optimisation may not yield the required EC per inference threshold.

In step 236, outputting the trained ML model and/or optimised ML model and associated efficiency metrics including EC parameters such as, without limitation, for example average EC per inference, EC per training sample, and/or any other efficiency and/or EC metrics/parameters and the like.

As an option, in step 232, the ML model may be optimised using quantization and/or weight pruning. Quantization is an optimisation technique used to constrain an input from a continuous or large set of values to a smaller discrete set of values. This concept may be used in optimising trained ML models by constraining a set of N-bit floating point values, to typically an $M$-BIT Integer (e.g., for CPUs) or a $P$-bit Float values (e.g., for GPUs), where $N>M$ and $N>P$ (e.g., N=32, M=8 or P=16 and/or any other suitable value). For example, the weights of the trained ML model may be quantized where 'highly precise' floating point weight values of the trained ML model may be quantized to a set of 8-BIT Integer weight values. Judicial adjustment of the quantisation of the weight values of an ML model may both reduce the ML model size and improve inference performance with minimal impact on accuracy. A smaller ML model may operate faster and require less memory when deployed, thus its EC per inference should be reduced. Several quantization techniques may be applied such as, without limitation, for example post-training quantization and quantization aware training. Post-training quantization is applied to the ML model after the training phase is completed. If the impact of post-training quantization is detrimental to accuracy, then quantization aware may be applied, where method 200 may be applied to perform training, but modified where the training emulates inference-time quantization.

Weight pruning is an optimisation technique that enables compressing of an ML model to a smaller size with zero or minimal loss of accuracy. The trained ML model may include millions of parameters which can make inference very energy intensive and expensive, especially on resource-constrained computing devices (e.g., mobile devices and/or edge devices and the like). Weight pruning is the process of eliminating (or pruning) the weights of the trained ML model that have the lowest magnitude. These weights are those that contribute the least to the final ML model output and performance. The original and pruned model essentially has the same architecture, but where the pruned model is sparser. Large-sparse ML models may typically outperform small-dense ML models across various different architectures. Thus, optimisation of the ML model may be performed gradually in an iterative manner to ensure the accuracy loss of the ML model is minimal whilst attempting to meet the EC target per inference threshold.

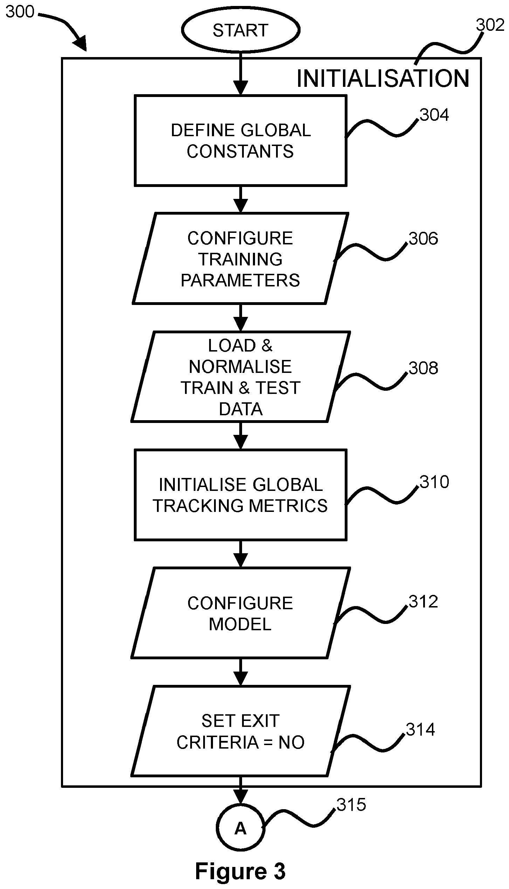

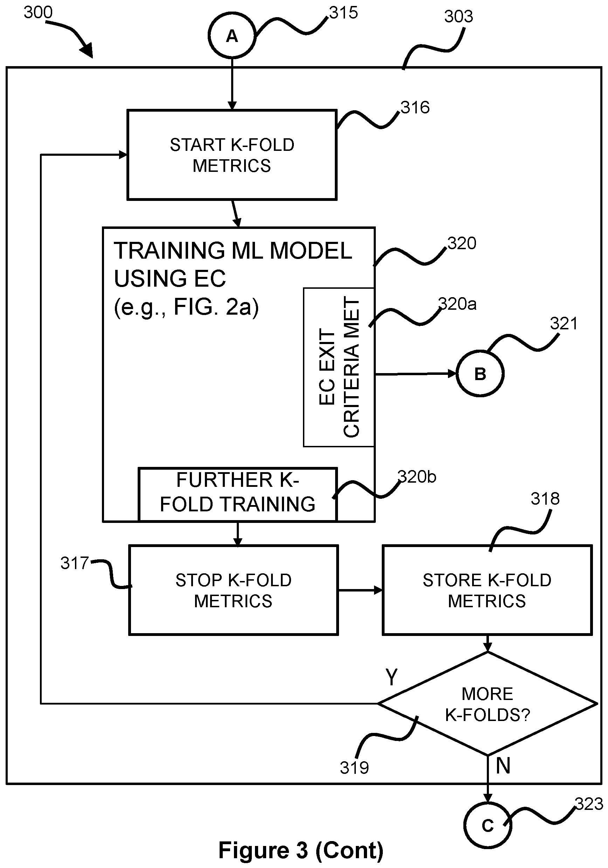

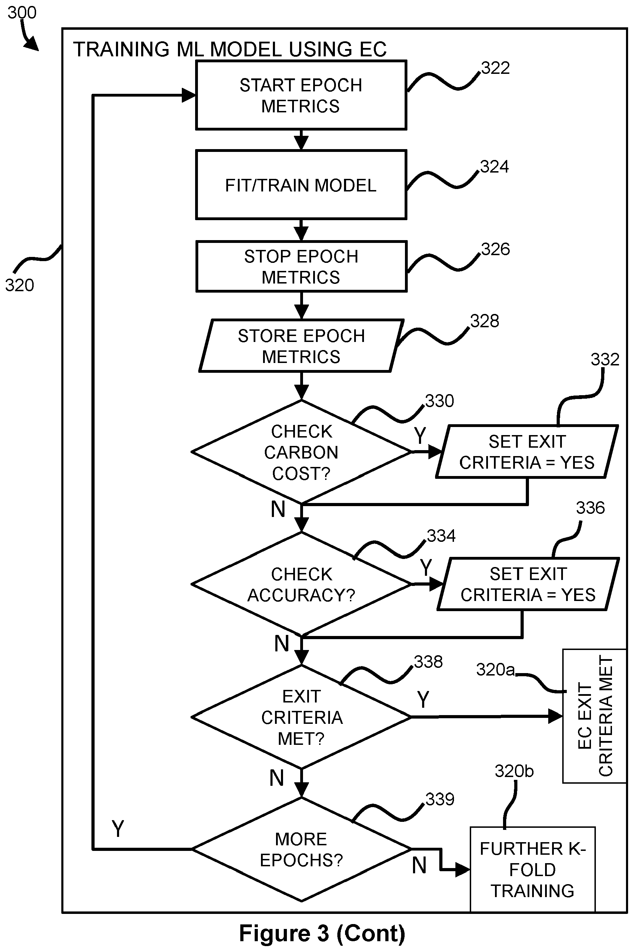

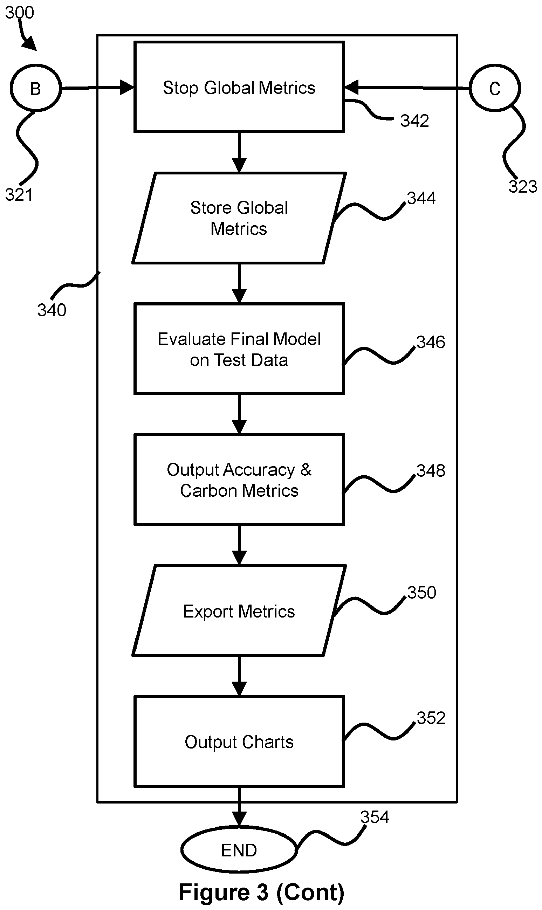

Figure 3 shows a schematic overview of another example method 300 for measuring efficiency during training of a subject ML model. This method 300 may be used to illustrate and/or define a training/inference framework for training any type of ML model until their measured EC meet an EC target threshold for training. The method 300 and/or framework may be configured with customisable training parameters for controlling training of the subject ML model, output efficiency metrics that may be measured to assess the energy efficiency of the trained ML model regardless of whether it is validly trained or not, and termination/exit criteria for ending training of the subject- ML model early. The method 300 / framework may include an initialisation operation 302, a training operation 303, and an ML model output operation 340. The method 300 includes the following operations of:

The initialisation operation 302 defines how the efficiency metrics are captured, configuration of the subject ML model, configuration of the training parameters for the subject ML model, and setting the termination criteria (e.g., exit criteria). The initialisation phase 302 may include one or more of the following steps of:

In step 304, defining global constraints such as the global variables and efficiency metrics for tracking. For example, one or more global variables and/or efficiency metrics that may be used in the method 300 / framework can be selected from one or more of, without limitation, for example Epochs, K-Fold, Training / Validation Accuracy & Loss, EC totals (e.g., Carbon Totals), FLOP Totals, and Time Totals. In step 306, configuring the training parameters of the subject ML model. The method 300 / framework may be configured to be reusable by allowing plug-in of any ML model and any dataset to be configured.

For example, customisable training parameters that may be used include, without limitation, for example batch size, number of Epochs, Loss function, Optimizer, number of K-Folds, EC target threshold (e.g., a Carbon target Threshold), and Accuracy/loss threshold and the like.

In step 308, loading and normalising the training dataset and/or test datasets for the subject ML model. In step 310, initialising the global tracking and efficiency metrics. The efficiency metrics are captured at three levels: Global level (Store Global Metrics), K-Fold level (Store K-Fold Metrics) and Epoch level (Store EPOCH Metrics). For example, the output efficiency metrics may be selected for each trained ML model and may include, without limitation, for example number of Epochs, K-Fold, Training / Validation Accuracy & Loss, EC totals (e.g., Carbon Totals), FLOP Totals, and Time Totals, and/or any other suitable efficiency metric and the like.

In step 312, configuring the subject ML model. This may include defining the structure of the subject-ML model based on, without limitation, for example configuring the hyperparameters of the subject ML model, defining the type of the subject ML model, and/or defining structural elements of the ML model and the like.

In step 314, initialising the terminating/exit criteria, and also setting the terminating/exit criteria flag which in this example is initially set to 'No' (e.g., set exit criteria = 'No'). The terminating or exit criteria flag may be any type of value representing whether to exit training operation 320 or not. Termination criteria for ending training early may include, without limitation, for example required accuracy/loss is achieved, or required accuracy/loss is divergent, or accuracy/loss is not converging fast enough to the require accuracy/loss, accumulated EC is too high (e.g., carbon cost too high) or greater than an EC target threshold (e.g., Carbon target threshold). An ML model may be considered to be validly trained when the required accuracy/loss is achieved.

Once initialised, the method 300 / framework proceeds from the initialisation operation 302 via connector 'A' to step 316 of the ML training operation 303. The ML training operation 303 includes an outer K-fold training loop and an inner Epoch training loop for training the subject ML model. The outer K-fold training loop is used to control K-Fold validation, where the training dataset is split into K-subsets, for K > 1. The outer K-fold loop may be repeated K times where each of the K subsets is selected and used as a test set and the other K-1 subsets are used for the training in the inner Epoch training loop. The ML training operation 303 includes the following steps of:

In step 316, tracking of the K-fold metrics is started for a selected different K-1 subsets of the training dataset. The K-fold metrics for the selected K-1 subsets may include, without limitation, for example number of Epochs, the K-Fold number, Training / Validation Accuracy & Loss, EC totals (e.g., Carbon Totals), FLOP Totals, and Time Totals for that selected K-1 subsets of the training dataset.

In step 320, the inner Epoch training loop is performed in which the subject ML model is trained over the selected K-1 subsets of the training dataset. The inner training loop may terminate based on EC exit criteria being met 320a in which the method 300 / framework proceeds from the inner training loop 303, via connector 'B', to the ML model output operation 340. Alternatively, the inner training loop may also terminate based on finishing the number of Epochs over the selected K-1 subsets of the training dataset, where further K-fold training 320b is determined to be required so the ML training operation 303 proceeds to step 317.

In step 317, tracking of the K-fold metrics for the selected K-1 subsets of the training dataset is stopped.

In step 318, the K-fold metrics for the selected K-1 subsets of the training dataset are stored.

In step 319, it is determined whether there are any more K-1 subsets of the K subsets that have not yet been selected. If there are more different combinations of K-1 subsets of the K-fold subsets (e.g., 'Y') then the ML training operation 303 proceeds to step 316 for starting the K-fold metrics for a new selected and different K-1 subsets of the training dataset, and the outer K-fold training loop is repeated. If there are no further combinations of the K-1 subsets of the K-fold subsets that have not been used for training the ML model (e.g., 'N'), then the ML training operation 303 proceeds, via connector 'C' 323 to the ML model output operation 340.

The inner Epoch training loop 320 is configured to receive the selected K-1 subsets of the training dataset from step 316 may be divided into a number of Epochs, each Epoch including a batch of training samples from the selected K-1 subsets of the training datasets. The inner Epoch training loop 320 may be configured to perform a number of Epoch iterations, each Epoch iteration corresponding to one of the batches of training samples for that Epoch iteration. The inner Epoch training loop 320 for training the ML model includes the following steps of:

In step 322, tracking of the Epoch metrics is started for the current Epoch iteration. The Epoch metrics for the batch of training samples of the current Epoch iteration may include, without limitation, for example the Epoch iteration number, the K-Fold number, Training / Validation Accuracy & Loss for the current Epoch iteration, EC totals (e.g., Carbon Totals) for the current Epoch iteration, FLOP Totals for the current Epoch iteration, and Time Totals for the current Epoch iteration.

In step 324, the subject ML model is trained over the batch of training samples of the current Epoch iteration (e.g., Fit model). Once all the training samples in the batch of training samples for the current Epoch iteration have been processed and the subject ML model has been updated accordingly, the inner Epoch training loop 320 proceeds to step 326. During training of the ML model, the Epoch metrics in relation to training / validation accuracy/loss are calculated and the EC totals for the current Epoch iteration are measured and estimated based on real-time sensor data and/or performance of the hardware performing the training of the ML model over the batch of training samples.

In step 326, tracking of the Epoch metrics for the current Epoch iteration is stopped.

In step 328, the Epoch metrics for the current Epoch iteration are stored.

In step 330, determining (or checking) whether the EC total (e.g., carbon cost or other suitable measure) for the current Epoch iteration is greater than an EC target threshold for an Epoch iteration (e.g., carbon cost threshold or other suitable threshold) (e.g., 'Yes'), then proceed to step 332, otherwise (e.g., 'No') proceed to step 334. In an example, the EC total for the current Epoch iteration may be added to an accumulated EC total of past Epoch iterations, where the accumulated EC total over all Epoch iterations so far is compared against an EC target threshold. If the accumulated EC total is greater than the EC target threshold (e.g., 'Yes') then the inner Epoch training loop 320 proceeds to step 332

In step 332, setting the exit criteria flag to "Yes" or any other suitable value indicating that the inner Epoch training loop 320 is to be exited.

In step 334, determining (or checking) whether the accuracy / loss of the ML model meets the required accuracy / loss threshold for the ML model. If the accuracy / loss of the ML model meets the required accuracy / loss threshold (e.g., the ML model has been validly trained) (e.g., 'Yes'), then proceed to step 336, otherwise (e.g., 'No')proceed to step 338. In another example for exiting the inner Epoch training loop 320 based on accuracy / loss, it may be determined that the calculated accuracy / loss of the ML model is divergent in which the calculated accuracy / loss for multiple consecutive Epoch iterations including the current Epoch iteration is getting worse or diverging away from the required accuracy / loss. If this is the case, then proceed to step 336 for exiting the inner Epoch training loop 320. In another example for exiting the inner Epoch training loop 320 based on accuracy / loss, the accuracy / loss for the ML model may be determined not to be converging fast enough to the required accuracy / loss. For example, the EC cost per improvement in accuracy / loss of the ML model compared with previous Epoch iterations has plateaued. If this is the case, then proceed to step 336 for exiting the inner Epoch training loop 320. In another example, terminating training of the ML model in response to determining that the convergence rate of the accuracy / loss for the ML model towards the required accuracy / loss for the current Epoch is below a convergence rate threshold for multiple consecutive Epochs. If this is the case, then proceed to step 336 for exiting the inner Epoch training loop 320.

In step 336, setting the exit criteria flag to "Yes" or any other suitable value indicating that the inner Epoch training loop 320 is to be exited.

In step 338, it is determined whether the exit criteria flag has been met, i.e., whether the exit criteria flag has been set to 'Yes' or other suitable value indicating that the inner Epoch training loop 320 should be exited. If the exit criteria flag has been met (e.g., 'Yes') then proceed via the EC exit criteria met 320a to connector 'B' 321 of the ML training operation 303, which connects to the ML model output operation 340. If the exit criteria flag has not been met (e.g., 'No')i.e., the exit criteria flag has been set to 'No' or other suitable value indicating that the inner Epoch training loop 320 should not be exited, then proceed to step 339.

In step 339, it is determined whether there are any more Epoch iterations to be performed. If there are more Epoch iterations to be performed (e.g., 'Y') then the inner Epoch training loop 320 proceeds to step 322 for selecting the next batch of training samples of the next Epoch iteration and starting the Epoch metrics for the next Epoch iteration as the current Epoch iteration, and so the inner Epoch training loop 320 is repeated. If there are no further Epoch iterations to be performed for training the ML model (e.g., 'N'), then the inner Epoch training loop 320 proceeds, to determine whether further K-fold training 320b is to be performed and proceed to step 317 of the ML training operation 303.

The ML model output operation 340 is entered via connector 'B' 31 or connector 'C' 323 from the ML training operation 303. The ML model output operation 340 includes the following steps of:

In step 342, stopping Global metric tracking.
In step 344, storing the Global metrics.
In step 346, evaluate the final trained ML model on the test data. This may include performing ML model inferencing on the test data and assessing the EC per inference for the trained ML model, and also measuring the accuracy / loss of the ML model when inferencing on test data that is not part of the training dataset.
In step 348, the accuracy / loss and EC per inference and/or EC for training the ML model may be output for review by a user.

In step 350, the efficiency metrics that have been collected at a Global level, K-fold level, and Epoch level may be exported and/or stored along with the trained ML model. It may also be checked that the trained ML model is validly trained, i.e., the required accuracy / loss has been met, where this may be indicated to the user and/or stored with the trained ML model.

In step 352, output charts displaying the efficiency and/or performance (e.g., EC and/or carbon cost, and accuracy / loss) of the ML model at a Global level, K-fold level and/or Epoch level may be displayed to a user for further evaluation and analysis. This may be used by the user to design an improved ML model for training and the like.

Additionally and/or alternatively, those validly trained ML models that meet the EC target threshold for training may be selected for inference benchmarking and assessed as to whether their measured EC meets an EC target threshold for inferencing or an EC target threshold per inference. The selected trained ML models may be further optimised by quantization and/or weight pruning along with retraining to further reduce their measured EC to meet the EC target threshold for inferencing or an EC target threshold per inference.

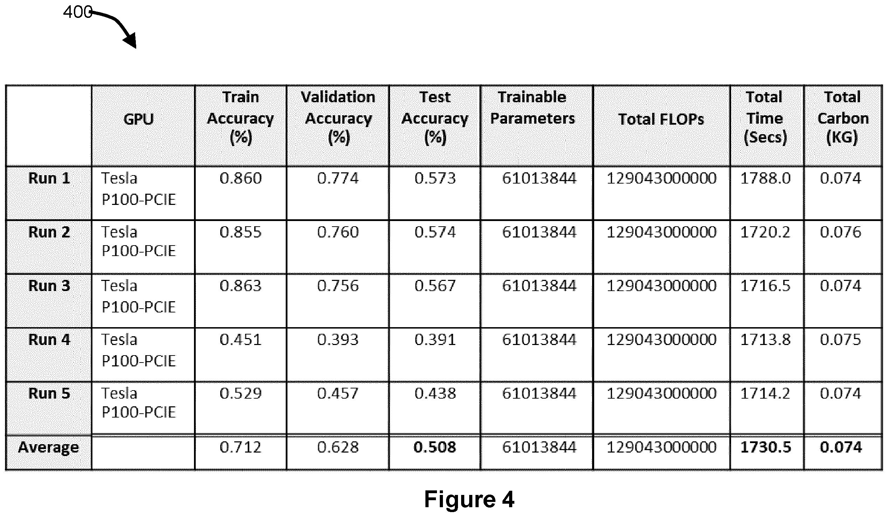

Figure 4 is a schematic diagram showing a table of test results 400 for training an active learning baseline ML model using the methods/frameworks 200 or 300 of Figures 2a and 3. In this example, the EC is based on carbon cost. The baseline ML model is based on the Visual Geometry Group (VGG)-16 model architecture. At this stage, no attempt has been made to optimise the model or any of the execution parameters or hyperparameters of the ML model. The methods/frameworks 200 or 300 of Figures 2a and 3 may be used to provide a baseline set of accuracy and EC efficiency measures against which performance can be improved and/or optimised. There are a number of performance characteristics that can be impacted by factors outside the direct control of the ML model, for example the hardware (CPU, GPU or TPU) characteristics. In order to account for variability five runs with the same ML model parameters were performed and the results averaged. The table of test results 400 of Figure 4 shows results of five experiments and average values for the variable performance measures. In summary an average Test accuracy of 50.8% was achieved in 1730.5 seconds at a carbon cost of 0.074Kg.

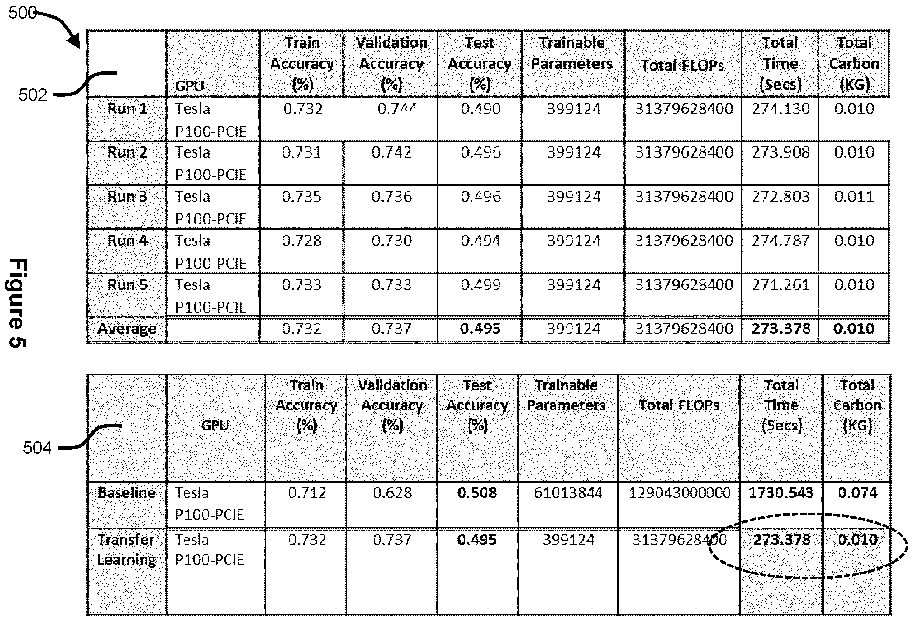

Figure 5 is a schematic diagram showing test results 500 for training a transfer learning model using the methods/frameworks 200 or 300 of Figures 2a and 3. The baseline model used in Figure 4 is based on the VGG-16 architecture. Figure 5 shows results for a transfer learning ML model incorporating VGG16 model. For this example, all the other parameters in the framework have remained unchanged compared to the baseline parameters used in Figure 4, where the same Tesla P100-PCIE GPU was used as for the baseline runs of Figure 4. The test results table 502 of Figure 5 shows the results of five identical experiments conducted using this set of experiment parameters. Again, the EC used for this case was carbon cost or total carbon emissions. The accuracy performance across the five runs of this transfer learning ML model is very consistent with very similar carbon metrics. The test results table 504 shows a comparison between the baseline results (average) recorded in the table or test results 400 of figure 4 (last row) and the average results of table 502 of figure 5 when transfer learning was applied. Whilst comparable train, validation and test accuracy has been recorded as the transfer learning model of figure 5 resulted in a reduced total training time and corresponding reduced total carbon cost (see dashed circle) compared with the average baseline ML model results of Figure 4. This illustrates the advantages of using a transfer learning architecture in ML compared with active learning of Figure 4.

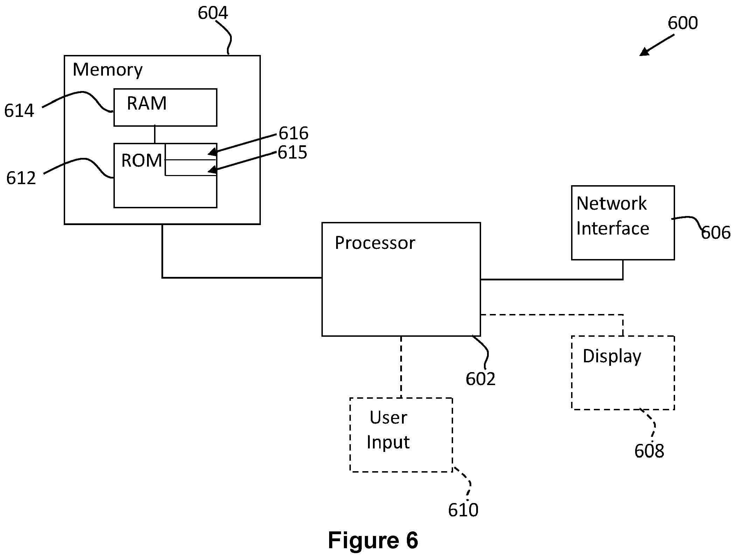

Figure 6 illustrates a schematic example of a computing system/apparatus 600 for performing any of the methods, operations or processes described herein and/or for implementing any of the systems, units and/or apparatus as described herein. The computing system/apparatus 600 shown is an example of a computing device or platform. It will be appreciated by the skilled person that other types of computing devices/systems/platforms may alternatively be used to implement the methods described herein, such as a distributed computing system.

The apparatus (or system) 600 comprises one or more processors 602 (e.g., CPUs, GPUs, TPUs, and the like). The one or more processors 602 control operation of other components of the system/apparatus 600. The system/apparatus 600 may be part of a computing device, computing system, distributed computing system, cloud computing platform and the like for implementing the functionality of the systems/apparatus and/or one or more methods/operations/processes as described herein. The one or more processors 602 may, for example, comprise a general-purpose processor. The one or more processors 602 may be a single core device or a multiple core device. The one or more processors 602 may comprise a Central Processing Unit (CPU) or a graphical processing unit (GPU), or a tensor processing unit (TPU). Alternatively, the one or more processors 602 may comprise specialized processing hardware, for instance a RISC processor or programmable hardware with embedded firmware. Multiple processors may be included. In some embodiments, the one or more processors 602 may be part of a distributed computing system such as a cloud computing system and/or cloud computing platform.

The system/apparatus comprises memory system or memory 604 including a working or volatile memory 614. The one or more processors 602 may access the volatile memory 614 in order to process data and may control the storage of data in memory. The volatile memory 614 may comprise RAM of any type, for example, Static RAM (SRAM), Dynamic RAM (DRAM), or it may comprise Flash memory, such as an SD-Card. In some embodiments, the memory 604 and/or one or more volatile memories 614 may comprise a multiple of a plurality of memory 604 forming part of the distributed computing system such as the cloud computing system and/or cloud computing platform and the like.

The system/apparatus comprises a non-volatile memory 612. The non-volatile memory 612 may store a set of operation or operating system instructions 615 for controlling the operation of the processors 602 in the form of computer readable instructions and/or software instructions 616 in the form of computer readable instructions, which when executed on the one or more processors 602 cause the processors to implement the methods, processes, operations and/or functionality of the methods, systems, apparatus and/or training/inference frameworks as described herein. The non-volatile memory 612 may be a memory of any kind such as a Read Only Memory (ROM), a Flash memory, SD drive, a magnetic drive memory or magnetic disc drive memory and the like as the application demands. In some embodiments, the non-volatile memory 612 may comprise a multiple of a plurality of non-volatile memory 612 forming part of the distributed computing system such as the cloud computing system and/or cloud computing platform and the like.

The one or more processors 602 are configured to execute operating instructions 615 and/or software instructions 616 to cause the system/apparatus to perform any of the methods or processes described herein. The operating instructions 615 may comprise code (i.e., drivers) relating to the hardware components of the system/apparatus 600, as well as code relating to the basic operation of the system/apparatus 600. Generally speaking, the one or more processors 602 execute one or more instructions of the operating instructions 615 and/or software instructions 616, which are stored permanently or semi-permanently in the non-volatile memory 612, using the volatile memory 614 to store temporarily data generated during execution of said operating instructions 615 and/or software instructions 616.

The one or more processors 602 may be connected to a network interface 606 including a transmitter (TX) and a receiver (RX) for communicating over a network with other apparatus and systems such as wastewater assets, wastewater network, wastewater network management systems, environmental data measurement services and/or operators and/or any other apparatus, service, system and/or device as the application demands. The one or more processors 602 may, optionally, be connected with a user interface (UI) 610 for user or operator input for instructing or using the computing system 600 and/or for outputting data therefrom. The one or more processors 602 may, optionally, be connected with a display 608 for displaying output to a user or operator. The at least one processor 602, with the at least one memory 604 and the computer program code 615, 616 are arranged to cause the computing system 600 to at least perform at least the operations, methods, and/or processes, for example as disclosed in relation to the schematic diagrams, flow diagrams or operations as described with any of figures 1a to 5 and related features thereof.

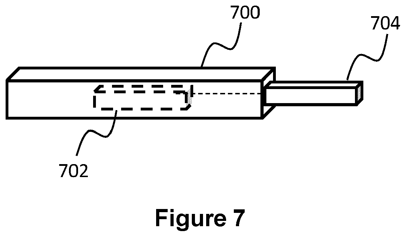

Figure 7 shows a non-transitory media 700 according to some embodiments. The non-transitory media 700 may include a computer readable storage medium 702 and/or input/output mechanism 704 for enabling a computing system 600 to access said computer-readable medium 702. Although in this example the non-transitory media is USB stick, this is by way of example only and the invention is not so limited, the skilled person would appreciate the non-transitory media 700 may be any other type of computer readable media or medium such as, for example, a CD, a DVD, a USB stick, a blue ray disk, flash drive etc. and/or any other computer readable media as the application demands. The non-transitory media 700 stores computer program code, causing an apparatus to perform one or more of the methods, operations, processors of any preceding process for example as disclosed in relation to the flow diagrams and schematic diagrams of figures 1a to 5 and related features thereof.

Implementations of the methods or processes described herein may be realized as in digital electronic circuitry, integrated circuitry, specially designed ASICs (application specific integrated circuits), computer hardware, firmware, software, and/or combinations thereof. These may include computer program products (such as software stored on e.g., magnetic discs, optical disks, memory, Programmable Logic Devices) comprising computer readable instructions that, when executed by a computer, such as that described in relation to Figure 6, cause the computer to perform one or more of the methods described herein.

Any system feature as described herein may also be provided as a method or process feature, and vice versa. As used herein, means plus function features may be expressed alternatively in terms of their corresponding structure. In particular, method aspects may be applied to system aspects, and vice versa.

Furthermore, any, some and/or all features in one aspect can be applied to any, some and/or all features in any other aspect, in any appropriate combination. It should also be appreciated that particular combinations of the various features described and defined in any aspects of the invention can be implemented and/or supplied and/or used independently.

Although several embodiments have been shown and described, it would be appreciated by those skilled in the art that changes may be made in these embodiments without departing from the principles of this disclosure, the scope of which is defined in the claims and their equivalents.

**Claims**

1. A computer implemented method of operating an ML training system (100) for training a machine learning, ML, model (108a), the method comprising:

   receiving (202) an energy consumption, EC, target threshold for training;
   training (204) an ML model (108a) based on a training dataset for an Epoch;
   estimating (206) an EC of the ML training system (100) whilst training said ML model (108a) over said Epoch;
   determining (208) whether an accumulated EC estimate is below the EC target threshold;
   in response to determining the accumulated EC estimate is less than the EC target threshold, updating (210, 212) the training dataset for a new Epoch and repeating the training, estimating, and generating steps using the updated training dataset with said new Epoch until the ML model is validly trained;
   terminating (218) training of the ML model in response to determining the accumulated EC meets or exceeds said EC target threshold;
   outputting (216) said validly trained ML model and associated EC metrics.

2. The computer implemented method of claim 1, wherein estimating said EC of said ML training system further comprising:

   receiving real-time sensor and performance data from the hardware of said ML training system (100) during training said ML model (108a) over said Epoch;
   estimating the EC of the ML training system (100) based on the received real-time sensor and performance data over the Epoch.

3. The computer implemented method of claim 2, the hardware of the ML training system (100) comprising one or more from the group of:

   one or more central processing units, CPUs (132a-132m);
   one or more graphical processing units, GPUs (134a-134n);
   one or more tensor processing units, TPUs (136a-136p);
   one or more memory or storage units (138a-138q);
   one or more communications or network resources; and/or
   any other hardware of the ML training system (100) associated with training said ML model (108a) and affecting the EC of the ML training system (100).

**4.** The computer implemented method of any of claims 2 or 3, wherein the real-time sensor and performance data comprising one or more of:

> electricity usage of the hardware of the ML training system (100) during training of the ML model (108a);
> temperature sensor data associated with the hardware used during training of the ML model (108a);
> clock cycles associated with one or more CPUs (132a-132m), GPUs 134a-134n) and/or TPUs (136a-136p) of said ML training system;
> power usage data associated with one or more CPUs (132a-132m), GPUs (134a-134n) and/or TPUs (136a-136p) and/or memory units (138a-138q) of said ML training system (100); and
> a number of floating point operations, FLOPS, performed by one or more CPUs (132a-132m), GPUs (134a-134n) and/or TPUs (136a-136p) and/or memory units (138a-138q) associated with the ML training system (100) when training said ML model (108a).

**5.** The computer implemented method of any preceding claim, wherein estimating the EC of the ML training system (100) further comprising calling an EC routine configured to monitor the EC performance of the corresponding portions of hardware ML training system (100).

**6.** The computer implemented method of any preceding claim, further comprising generating the accumulated EC estimate based on the estimated EC for the current Epoch and any previous Epochs.

**7.** The computer implemented method of any preceding claim, wherein the EC estimate is measured in terms of carbon or $CO_2$ emissions.

**8.** The computer implemented method of any preceding claim, wherein the EC estimate is an EC estimate per training sample.

**9.** The computer implemented method of any preceding claim, further comprising:

> determining whether the ML model (108a) is validly trained based on whether the average accuracy / loss of the ML model (108a) output achieves a required accuracy / loss threshold; and
> terminating training of the ML model (108a) in response to determining the ML model (108a) is validly trained.

**10.** The computer implemented method of any preceding claim, wherein terminating training of the ML model in response to determining the accumulated EC meets or exceeds said EC target threshold further comprising determining whether the ML model is validly trained based on whether the average accuracy / loss of the ML model output achieves a required accuracy / loss threshold.

**11.** The computer-implemented method of any preceding claim, further comprising, for each of the trained ML models (108a-108m) that are validly trained, performing EC benchmarking of each of the validly trained ML models (108a-108m) for inferencing based on, for each validly trained ML model (108a), the following steps of:

> receiving (222) an EC target threshold for inferencing with said each trained ML model;
> receiving (224) a batch of input data for input to said each trained ML model for inferencing;
> performing (228) ML model inferencing using the trained ML model on the batch of input data;
> estimating (228) an EC per inference for the trained ML model when performing ML model inferencing on the batch of input data;
> determining (230) whether the EC estimate per inference is greater than the EC target threshold for inferencing;
> in response to determining the EC estimate per inference is less than or equal to the EC target threshold, outputting (236) an EC ML model including data representative of the trained ML model and the EC estimate per inference;
> in response to determining the EC estimate per inference is greater than the EC target threshold for inferencing, performing ML model optimisation (232) on the trained ML model for reducing the EC estimate per inference and repeating (234) EC benchmarking of the resulting optimised ML model.

**12.** The computer implemented method of claim 11, wherein performing optimisation of the trained ML model further comprising:

> modifying the trained ML model based on at least one of quantisation techniques and weight pruning techniques to form an optimised ML model; and
> retraining the optimised ML model to meet an EC target threshold for training or when the optimised ML model is validly trained.

**13.** A computer program product (700) comprising computer readable instructions that, when executed by a computer (600), cause the computer (600) to perform the method of any preceding claim.

**14.** Apparatus (600) comprising one or more processors (602) and a memory (604), the memory (604) storing computer readable instructions that, when executed by the one or more processors (602), cause the apparatus (600) to perform the method of any of claims 1 to 12.

15. A system (100) comprising:

   one or more processors (132a-132m); and
   a memory (138a), the memory (138a) storing computer readable instructions that, when executed by the one or more processors (132a-132m), cause the apparatus (100) to perform the method of any of claims 1 to 12.

EP 4 418 166 A1

**Figure 1a**

120

# EC FRAMEWORK

122

## Training and Inference Optimisation

124

### EC Estimation

126

#### ML MODEL(S)

**Figure 1b**

**Figure 1c**

200

Receive energy consumption (EC)
target threshold for training ~202

Train ML model on training dataset
for an epoch ~204

212

Update
epoch and/or
training
dataset

Estimate EC for training ML model
over said epoch ~206

208

Accumulated
EC estimates <
EC threshold

N

Y ~210

N

ML model
validly trained?

214

Y

Y

Accuracy
OK?

N

216

Output trained ML model
and associated EC
parameters

Stop

218

**Figure 2a**

220

Receive energy consumption (EC) target threshold for inferencing — 222

Receive batch of input data for ML model inference — 224

Perform ML model inference using trained ML model on input data batch — 226

234

Use Optimised ML model for inference

Estimate average EC per inference for ML model inference over said input data batch — 228

230

Estimated EC per inference > EC threshold

N

Y

232

ML model optimisation

236

Output ML model and associated EC parameters

**Figure 2b**

**Figure 3**

Figure 3 (Cont)

Figure 3 (Cont)

300

B

Stop Global Metrics — 342

C

321

323

Store Global
Metrics — 344

340

Evaluate Final Model
on Test Data — 346

Output Accuracy &
Carbon Metrics — 348

Export Metrics — 350

Output Charts — 352

END — 354

**Figure 3 (Cont)**

400

| | GPU | Train Accuracy (%) | Validation Accuracy (%) | Test Accuracy (%) | Trainable Parameters | Total FLOPs | Total Time (Secs) | Total Carbon (KG) |
|---|---|---|---|---|---|---|---|---|
| **Run 1** | Tesla P100-PCIE | 0.860 | 0.774 | 0.573 | 61013844 | 129043000000 | 1788.0 | 0.074 |
| **Run 2** | Tesla P100-PCIE | 0.855 | 0.760 | 0.574 | 61013844 | 129043000000 | 1720.2 | 0.076 |
| **Run 3** | Tesla P100-PCIE | 0.863 | 0.756 | 0.567 | 61013844 | 129043000000 | 1716.5 | 0.074 |
| **Run 4** | Tesla P100-PCIE | 0.451 | 0.393 | 0.391 | 61013844 | 129043000000 | 1713.8 | 0.075 |
| **Run 5** | Tesla P100-PCIE | 0.529 | 0.457 | 0.438 | 61013844 | 129043000000 | 1714.2 | 0.074 |
| **Average** | | 0.712 | 0.628 | **0.508** | 61013844 | 129043000000 | **1730.5** | **0.074** |

**Figure 4**

EP 4 418 166 A1

500

502

| | GPU | Train Accuracy (%) | Validation Accuracy (%) | Test Accuracy (%) | Trainable Parameters | Total FLOPs | Total Time (Secs) | Total Carbon (KG) |
|---|---|---|---|---|---|---|---|---|
| Run 1 | Tesla P100-PCIE | 0.732 | 0.744 | 0.490 | 399124 | 31379628400 | 274.130 | 0.010 |
| Run 2 | Tesla P100-PCIE | 0.731 | 0.742 | 0.496 | 399124 | 31379628400 | 273.908 | 0.010 |
| Run 3 | Tesla P100-PCIE | 0.735 | 0.736 | 0.496 | 399124 | 31379628400 | 272.803 | 0.011 |
| Run 4 | Tesla P100-PCIE | 0.728 | 0.730 | 0.494 | 399124 | 31379628400 | 274.787 | 0.010 |
| Run 5 | Tesla P100-PCIE | 0.733 | 0.733 | 0.499 | 399124 | 31379628400 | 271.261 | 0.010 |
| Average | | 0.732 | 0.737 | 0.495 | 399124 | 31379628400 | 273.378 | 0.010 |

504

| | GPU | Train Accuracy (%) | Validation Accuracy (%) | Test Accuracy (%) | Trainable Parameters | Total FLOPs | Total Time (Secs) | Total Carbon (KG) |
|---|---|---|---|---|---|---|---|---|
| Baseline | Tesla P100-PCIE | 0.712 | 0.628 | 0.508 | 61013844 | 129043000000 | 1730.543 | 0.074 |
| Transfer Learning | Tesla P100-PCIE | 0.732 | 0.737 | 0.495 | 399124 | 31379628400 | 273.378 | 0.010 |

**Figure 5**

**Figure 6**

**Figure 7**

Europäisches
Patentamt

European
Patent Office

Office européen
des brevets

# EUROPEAN SEARCH REPORT

**Application Number**

**EP 23 27 5024**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LASSE F WOLFF ANTHONY ET AL: "Carbontracker: Tracking and Predicting the Carbon Footprint of Training Deep Learning Models", ARXIV.ORG, CORNELL UNIVERSITY LIBRARY, 201 OLIN LIBRARY CORNELL UNIVERSITY ITHACA, NY 14853, 6 July 2020 (2020-07-06), XP081717093, * the whole document * | 1-15 | INV. G06N3/0495 G06N20/00 G06N3/08 G06F9/50 G06N3/063 G06N3/082 G06F11/30 G06F1/3228 |
| A | SEMEN BUDENNYY ET AL: "Eco2AI: carbon emissions tracking of machine learning models as the first step towards sustainable AI", ARXIV.ORG, CORNELL UNIVERSITY LIBRARY, 201 OLIN LIBRARY CORNELL UNIVERSITY ITHACA, NY 14853, 3 August 2022 (2022-08-03), XP091287134, * the whole document * | 1-15 | |
| A | US 2021/089921 A1 (AGHDASI FARZIN [US] ET AL) 25 March 2021 (2021-03-25) * claim 1 * | 1-15 | TECHNICAL FIELDS SEARCHED (IPC) G06N G06F |

The present search report has been drawn up for all claims

| Place of search | Date of completion of the search | Examiner |
|---|---|---|
| Munich | 14 July 2023 | Rackl, Günther |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 27 5024

This annex lists the patent family members relating to the patent documents cited in the above-mentioned European search report.
The members are as contained in the European Patent Office EDP file on
The European Patent Office is in no way liable for these particulars which are merely given for the purpose of information.

14-07-2023

| Patent document cited in search report | Publication date | Patent family member(s) | Publication date |
|---|---|---|---|
| US 2021089921 A1 | 25-03-2021 | CN 114365156 A | 15-04-2022 |
| | | DE 112020003547 T5 | 14-04-2022 |
| | | US 2021089921 A1 | 25-03-2021 |
| | | WO 2021061962 A1 | 01-04-2021 |

EPO FORM P0459

For more details about this annex : see Official Journal of the European Patent Office, No. 12/82